# EUROPEAN PATENT SPECIFICATION

(11) **EP 3 386 672 B1**
(45) Date of publication and mention of the grant of the patent: **12.02.2020**
(21) Application number: 16815556.2
(22) Date of filing: 06.12.2016
(51) Int. Cl.: B23K 9/18, B23K 31/02, E01C 19/10, B23K 101/04, B23K 101/08

(54) **DRUM FOR A DRYER AND METHOD OF MANUFACTURING A DRUM FOR A DRYER FOR CONGLOMERATES**
TROMMEL FÜR EINEN TROCKNER UND VERFAHREN ZUR HERSTELLUNG EINER TROMMEL FÜR EINEN TROCKNER FÜR KONGLOMERATE
TAMBOUR DESTINÉ À UN SÉCHOIR ET PROCÉDÉ DE FABRICATION D'UN TAMBOUR DESTINÉ À UN SÉCHOIR POUR CONGLOMÉRATS

(30) Priority: 11.12.2015 IT UB20156836
(43) Date of publication of application: 17.10.2018
(73) Proprietor: Marini S.p.A., 48011 Alfonsine (RA) (IT)
(72) Inventor: CAMPRINI, Luca, 48011 Alfonsine (RA) (IT)
(74) Representative: D'Agostini, Giovanni
(86) International application number: PCT/EP2016/002044
(87) International publication number: WO 2017/097409

(56) References cited:
- DE-A1- 10 156 106
- US-A- 5 878 940
- US-A1- 2012 131 812
- US-A1- 2015 290 752
- US-B1- 6 270 044

## Description

### Technical field

The present invention relates to a drum for a dryer and a method of manufacturing a drum for a dryer for the drying of conglomerates according to the preamble of claims 6 and 1 respectively (see, for example, US 2012/131812), in particular in a processing plant of conglomerates with bituminous and non-bituminous binders. The invention is usefully, although not exclusively, applied in the production of bituminous conglomerates, in particular for road paving.

### Prior art

In the field of the production of mixtures in the form of conglomerates with bituminous and non-bituminous binders it is known to use a dryer for eliminating humidity from the conglomerates before their mixing with the binders to obtain the mixture in the form of conglomerates with binders, for example to obtain bituminous conglomerate, that is to say, a ready-to-use bituminous mixture, in particular for road paving.

Patent EP0362199, in the name of the same applicant, describes an apparatus for the production of bituminous conglomerate using a rotatable drying and mixing drum having a flow of combustion gas in countercurrent which is generated by means of a burner placed downstream with respect to the advancement direction of the material to be dried. The drum is provided with means for advancing, drying, impregnating and mixing the material with bituminous substances and fillers. The drum is divided into multiple chambers communicating with each other. The burner is provided with a respective nozzle which generates a flame in a combustion chamber.

Patent application US-4,522,498 describes an apparatus for recycling bituminous conglomerate comprising an elongated rotating drum in which the composition is introduced in a first end and recovered in the opposite second end, and having a burner which extends in the drum in such a way that the nozzle of the burner is located inside the drum in an intermediate position between the first and the second end and directs the hot gases towards the first end.

The prior art solutions relating to the method of manufacturing the dryer are conceived in such a way that, once the cylindrical drum of the dryer has been assembled, the operators enter the cylindrical drum and proceed with the welding of fixing the supports of the internal blades of the dryer, proceeding in this way for each of the many blades which must be mounted inside the dryer.

Patent application US 2012/131812 describes a rotating drying cylinder for plants for the production of bituminous products, the cylinder extending along a main axis. The drying cylinder comprises a burner connected to the cylinder. The burner generates a flame extending inside the cylinder. The drying cylinder comprises on its inside a tubular shielding structure having an axis extending substantially parallel to the main axis of the cylinder. The tubular shielding structure extends from the burner in such a way that the flame is enclosed at least mainly inside the shielding structure, there thus being a separation ring between the shielding structure and the internal surface of the drying cylinder. The shielding structure comprises a plurality of hollows for containing the material to be dried, the hollows facing the internal surface of the drying cylinder. The shielding structure is at least mainly made of heat conducting materials. Inside the separation ring there is a plurality of container blades mounted on the internal surface of the drying cylinder according to a configuration in which the container blades have a radial arrangement. The container blades are fixed to the internal surface of the drying cylinder and can be positioned parallel to the main axis and radially distributed with respect to the main axis. In an alternative embodiment the container blades can be fixed to the internal surface in such a way that they are angled with respect to the main axis. Each container blade is fixed to the internal surface of the drying cylinder by means of brackets welded to the internal surface of the drying cylinder.

Patent application US 5 878 940 describes a method for joining metal-sheet parts, which comprises the formation of tongues on one part and slots on the other part of a pair of parts to be welded together, the tongues having a length equal to half the dimensional thickness of the parts. The tongues fit precisely within the slots and the welding occurs within the slots in correspondence of the ends of the tongues in such a way that the tongues and the material which surrounds the slots are melted together with the welding wire or rod, therefore the heat generated by the welding process and the resulting welding material are in the neutral axis of the parts that are joined together so as to reduce or eliminate the distortion of the pieces due to the welding process.

Patent application US 2015/290752 describes a hot moulding process for forming a steel sheet of a rotor blade of a wind power plant. The process comprises phases of heating of the steel sheet in a furnace, while the steel sheet is lying on a mobile transport trolley, phases of movement of the heated sheet with the mobile transport trolley from the furnace into a pressing apparatus for the heat shaping operation, phases of transfer of the steel sheet heated in the pressing apparatus from the mobile transport trolley onto a shaping trolley having a complementary shape and phases of pressing of the sheet by means of at least one pressing punch that presses on the sheet in such a way that it is shaped between the pressing punch and the complementary shape in particular assuming the shape of the pressing punch and the complementary shape.

### Problems of the prior art

The prior art solutions, which provide the fixing of the supports of the blades according to procedures which occur entirely inside the dryer, have the drawback that the operators operate in a nearly closed environment because, although the drum is open in correspondence of the ends during such operations, the length of the drum itself does not allow for an effective air circulation on its inside. Although there are welding fume extractors, the operators are in any case exposed to the welding fumes emitted during the operations of fixing of the blades inside the drum. Considering that, on average, inside a dryer there are from 150 to 300 blades and that each of them is supported by at least two supports which must be firmly fixed by welding to the internal walls of the drum, it is understood that the operation is considerably long and the time spent inside the drum is long, approximately of the order of 24 hours. In order to avoid excessive exposure to the emitted welding fumes, one provides break and rest times for the operators which also reach percentages of 16% with respect to the overall time which is strictly necessary to complete the welding operations, thus implying an increase in the overall processing time with consequent additional costs.

Furthermore, the welding operations are performed manually inside the drum in non-optimal working conditions because the fixing welding is made in a closed environment with the operators moving while standing on a cylindrical surface on which they must also carry out said welding operations.

Furthermore, the welding operations are performed manually inside the drum in non-optimal working conditions because the fixing welding is made in a closed environment with the operators moving while standing on a cylindrical surface on which they must also carry out said welding operations.

Such difficult operating conditions also involve the risk of welding errors, which may affect the stability of the corresponding blades.

### Aim of the invention

The aim of the present invention is to provide a method of manufacturing a dryer that ensures shorter manufacturing times.

### Concept of the invention

A method of manufacturing a drum for a dryer for the drying of materials in the form of conglomerates and a drum for such a dryer according to the present invention are defined in claims 1 and 6 respectively.

The sub-claims represent advantageous solutions.

### Advantageous effects of the invention

The solution according to the present invention, by the considerable creative contribution the effect of which constitutes an immediate and important technical progress, presents various advantages.

The solution according to the present invention allows to considerably reduce the times for manufacturing the dryer.

Furthermore, the solution according to the present invention allows to reduce the time spent by the operator in a confined place and in non-ergonomic positions.

The solution according to the present invention also allows to obtain a fixing of the internal blades of the dryer with better characteristics in terms of quality and reliability of the welds as well as provide greater resistance and duration.

### Description of the drawings

In the following a solution is described with reference to the enclosed drawings, which are to be considered as a non-exhaustive example of the present invention in which:
Fig. 1 shows a perspective view of a dryer made according to the present invention.
Fig. 2 shows a schematic plan view of a dryer made according to the present invention.
Fig. 3 represents a schematic front view of a portion of a dryer made according to the present invention.
Fig. 4 shows a perspective view of a detail of the dryer of Fig. 1.
Fig. 5 shows a perspective sectional view of a part of the dryer of Fig. 1.
Fig. 6 shows a view from the inside of a part of the dryer of Fig. 1.
Fig. 7 shows a view from the inside of a sectioned part of the dryer of Fig. 1.
Fig. 8 shows a side view of a sectioned part of the dryer of Fig. 1.
Fig. 9 shows a side view of a part of the dryer of Fig. 1.
Fig. 10 schematically shows the external fixing weld.

### Description of the invention

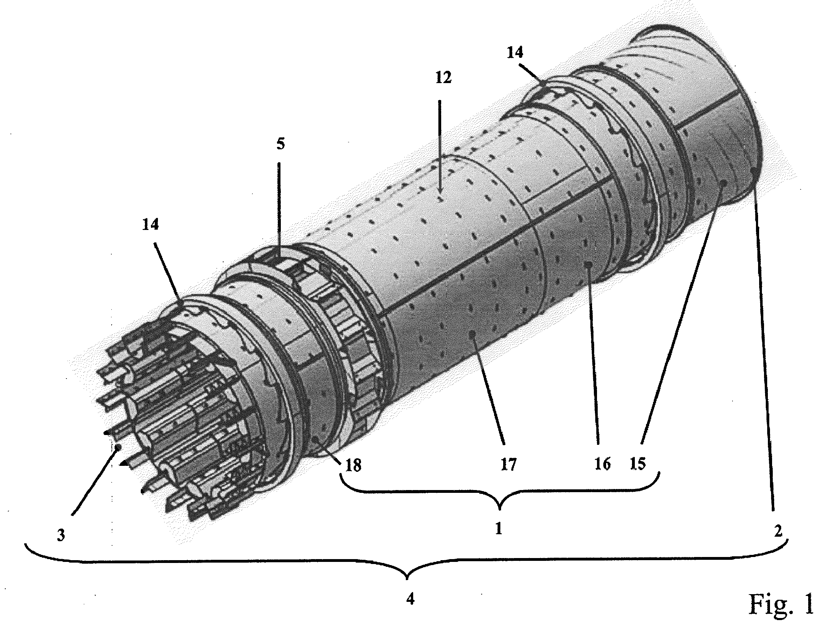

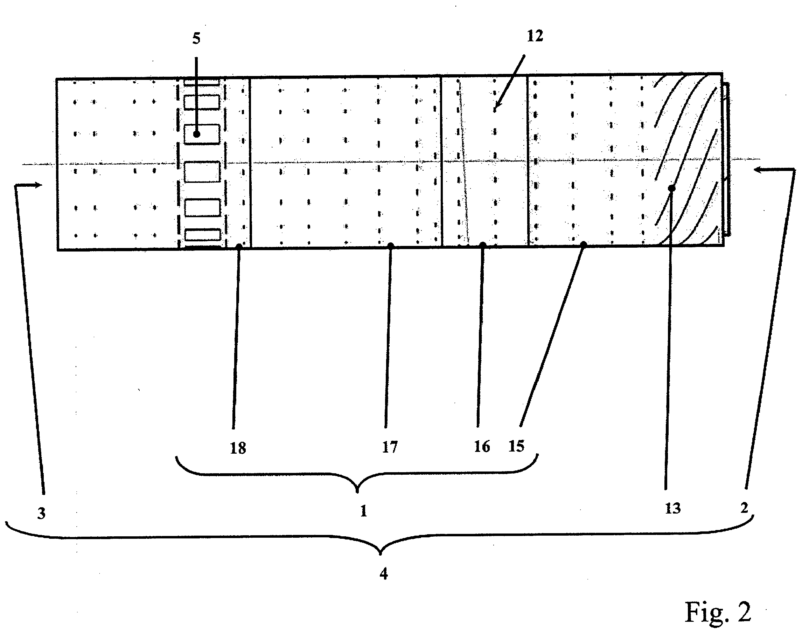

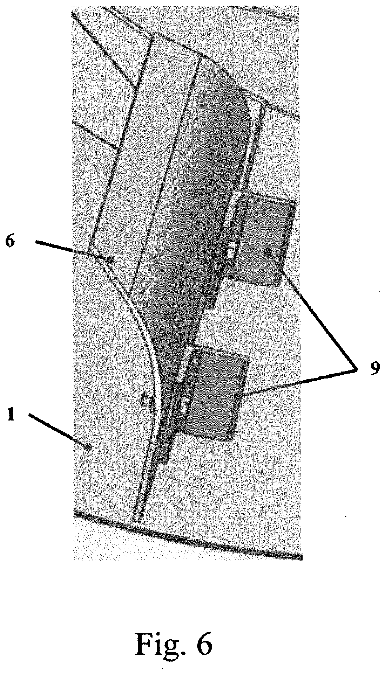

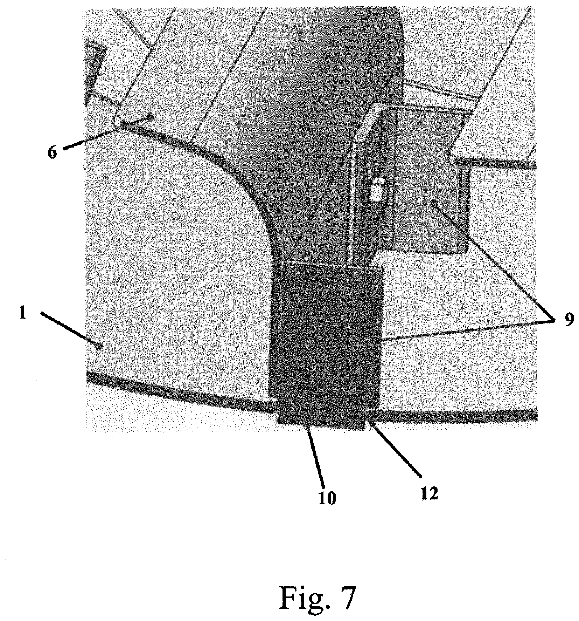

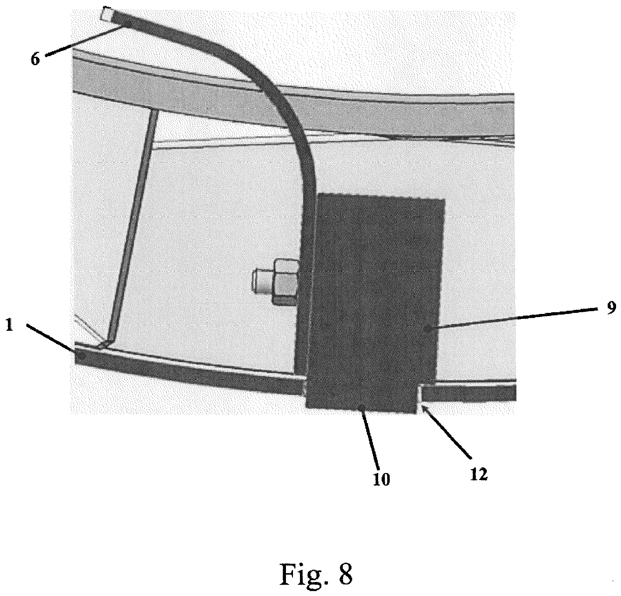

With reference to the Figures (Fig. 1, Fig. 2, Fig. 3, Fig. 4, Fig. 5, Fig. 6, Fig. 7, Fig. 8, Fig. 9), the present invention relates to a method of manufacturing a dryer (4) and in particular to a method for manufacturing the drum (1) for the dryer (4).

The dryer (4) according to the present invention is of the type adapted to be used in a plant for the hot production of mixtures in the form of conglomerates with bituminous and non-bituminous binders consisting of:
- inert materials, preferably inert lithic materials, generally gravel, of varied granulometry;
- binder, preferably bitumen, which acts as a binder of the formed mixture;
- possible recycled conglomerates, for example consisting of asphalt products from recycling.

The production cycle for preparing the mixtures in the form of conglomerates with bituminous and non-bituminous binders provides that the inert lithic materials and the recycled conglomerates, if present, are sent to a dryer (4) where they are heated by means of a burner to eliminate their humidity.

With particular reference to the structure of the dryer (4), it preferably consists of a drum (1) which can be made in the form of a single rotating drum put in rotation by respective driving means or in the form of a pair of rotating drums comprising a first rotating drum put in rotation by first driving means and a second rotating drum put in rotation by second driving means. The first rotating drum and the second rotating drum are, in that case, coaxial, independent rotating drums arranged one after the other and the first driving means and the second driving means are independent with respect to each other in the sense that they can control the rotation of the respective drum at a speed of rotation controllable independently with respect to the speed of the other drum.

The drum (1) is provided with a material inlet mouth (2) in which the material to be processed is introduced, which consists of inert materials, preferably inert lithic materials, generally gravel, of varied granulometry and possibly also of recycled material.

The drum (1) is provided with an outlet mouth (3) of the processed materials.

The material to be processed is made to advance inside the dryer by means of blades (6) which can be made in the form of lifting blades, lifting cups or other configurations. The blades (6) are fixed inside the rotating body of the drum (1) and are configured and structured in such a way as to lift the material which is in the dryer (4) and cause its advancement by continuous fall of the material itself. One can use blades (6) of different shape along the direction of the material flow, such as blades (6) which are larger or shaped as a more closed cup in the sections of the drum (1) which are more advanced with respect to the direction of the material flow, that is to say, in the sections of the drum (1) which are further from the inlet mouth (2) of the material. In the sections of the drum (1) which are more advanced there may be blades (6) having a shape such as to lift the material making it advance and preventing the material from falling through the hot combustion gases when the drum is rotated, to obtain a combustion without drawbacks, leaving a free central axial space which is affected by the flame of the burner.

The method according to the invention for manufacturing the dryer provides some preliminary phases of manufacturing of the drum (1). In such preliminary phases the production cycle starts with the calendering of the metal-sheets which make up the cylindrical structure. One or more cylindrical ferrules (15, 16, 17, 18) are made. For example one can provide configurations of the drum (1) consisting of the assembly of four ferrules (15, 16, 17, 18) of which a first ferrule (15), a second ferrule (16), a third ferrule (17), a fourth ferrule (18). Each ferrule (15, 16, 17, 18) is closed with continuous welding inside the cylindrical structure consisting of the ferrule itself.

A ring is then bench assembled and welded, which afterwards is spot-welded to one of the ferrules (15, 16, 17, 18). The ferrules (15, 16, 17, 18) are positioned on an assembly station in which the drum (1) is made up by continuously welding on the inside the joint between the various ferrules (15, 16, 17, 18) present. The drum (1) is thus made by welding together one or more ferrules (15, 16, 17, 18) and the so made drum (1) then passes in a submerged arc station where some external longitudinal and circumferential welds are made exploiting the previously made internal welds with a restraint function. The drum (1) can then pass to a following processing station in which some rolling rings (14) are assembled, which will be fixed to the drum (1) in following processing phases which will be described hereinafter.

At this point the installation of the supports (9) with the blades (6) already mounted is carried out, which are preferably installed in a condition in which the blades (6) are already mounted on the supports (9) themselves.

The operator positions the supports (9) inside the drum (1) and performs a provisional fixing of the supports (9), said provisional fixing being suitable to keep the supports (9) in the established assembly position while the drum (1) is rotated to allow the operator to position the supports all over the internal surface of the cylindrical drum (1). For example, the provisional fixing can be performed by means of at least one welding spot. The supports (9) are provided with at least one tooth (10) which is inserted within a seat (12) obtained on the surface of the drum, said seat (12) being a passing-through seat (12) and the tooth (10) having a height such that, when the support (9) is in the provided assembly position, the tooth (10) protrudes at least partially through the seat (12) in such a way as to protrude externally with respect to the perimeter surface of the drum (1). In this way an automated station can perform welding operations from outside the drum (1) without the intervention of the operator. In this way the operator is prevented from performing operations of welding of the supports from inside the drum (1).

Many tests were made to get to this solution.

Structural tests were made because, in order to realize the present invention, it was necessary to pass from a situation in which the drum consisted of a continuous sheet folded until it assumed a cylindrical shape to a new situation in which the drum consists of a completely holed sheet due to the passing-through seats (12) all over the surface of the drum (1). The presence of the passing-through seats (12) causes a structural weakening of the external ferrules which might be critical above all considering that the blades (6) and the respective supports (9) must be characterised by great solidity and resistance as they are continuously exposed to the passage of material which advances in the dryer bumping into and falling onto the blades (6) and onto the respective supports (9), as well as thermal stresses due to the high temperatures reached by the ferrules, also of the order of 400°C. Technical tests were made for the purpose of assessing the impact of the passing-through seats (12) to avoid formation of cuts, cracks, fractures mainly deriving from thermal stresses.

In order to assess the impact of the notches on the structural behaviour of the dryer assembly supported by the rolling rollers, an analysis of the finished elements was performed. The results of this analysis did not show tensional and dimensional differences of the dryer with respect to the version without notches.

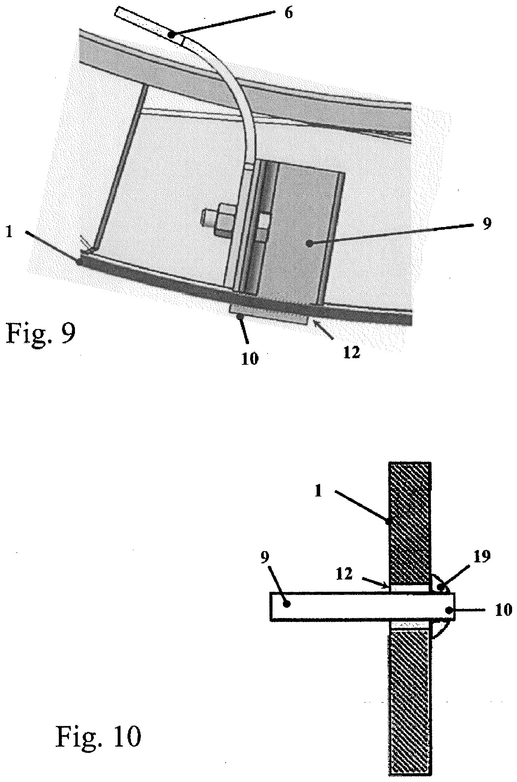

To simulate the seats with notches, some specimens were made each with slightly different geometries in sizes and radiussing of the notches. Such specimens were submitted to tensile tests showing that the geometry of the slits/holes does not create problems or stress raisers which anticipate the yield and breaking of the material with respect to its nominal characteristics. Therefore, the geometry of the slit does not weaken the structure. However, it emerges that the presence of the notch weakens the resistance of the sheet, resistance which is entrusted to the weld. In the tests made the dimension (Fig. 10) of the welding seam (19) is Z10 consistent with the thickness of the sheet of the dryer, which, too, is of 10 mm. With such a dimension of the seam the resisting thickness is reduced to 7-8 mm, causing a reduction of the resistance of the joint. Said resistance reduction can be compensated for by increasing the thicknesses of the weld and sheet of the dryer from 10 mm to 12 mm, obtaining in this case a situation equivalent to the current one and using a more resistant welding wire.

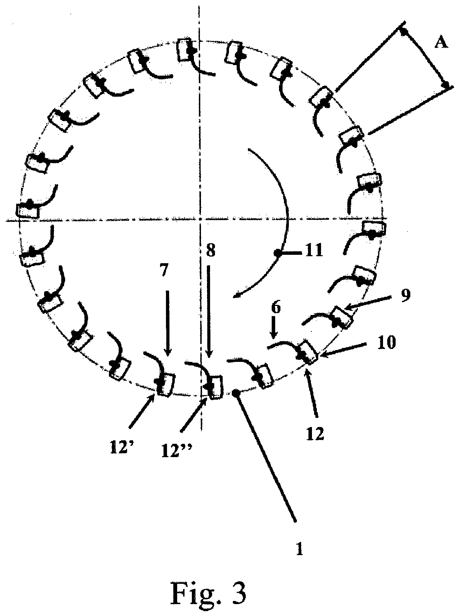

The supports (9) with the respective blades (6) are applied (Fig. 3) in sequence on at least one first internal area of the drum (1) according to an assembly method in which:
- one or more first rows (7) of blades or supports are applied by a provisional fixing of the supports in correspondence of one or more first series of seats (12') which are arranged below inside the drum, the term "below" referring to the direction of the force of gravity;
- the drum (1) is rotated according to a direction of rotation (11) by an angle of rotation such as to bring below inside the drum one or more second series of seats (12") which are still without the supports, the term "below" referring to the direction of the force of gravity;
- one or more second rows (8) of blades or supports are applied by means of a provisional fixing of the supports in correspondence of the one or more second series of seats (12") which are arranged below inside the drum, the term "below" referring to the direction of the force of gravity;

The operator positions and spot-welds the various rows (7, 8) of blades or supports, being careful to fit each tooth (10) of the supports (9) in the corresponding seat (12) in the form of a slit obtained on the ferrules which make up the drum (1). The rows (7, 8) of blades or supports are applied inside the drum (1) in a region which extends up to a first row of anti-irradiation fins.

Afterwards, by means of a plasma-jet machine, some circumferential openings (5) are made in an area of the drum (1) corresponding to an introduction area within the drum (1) of recycled materials to be mixed with the conglomerate being dried. In correspondence of the circumferential openings (5) some recycling rings are thus spot-welded, which are used for the application of slides for directing the recycled materials into the drum (1) through the circumferential openings (5). Some mechanical seals are also made on the drum (1).

Then some recycling fins are welded inside the cylinder.

Finally, the application of the supports (9) with the respective blades (6) on at least one second internal area of the drum (1) is completed according to an assembly method similar to what has been previously described with reference to the first internal area of the drum (1).

Then some fixing bases of a series of outlet blades (13) are spot-welded on the unloading side of the drum (1), that is to say, in correspondence of the zone of the drum (1) in which there is the material outlet mouth (3).

Then an application base is obtained for the application of insulation material, the application base being made by means of a series of calendered angles arranged circumferentially with respect to the drum (1) and a series of segments arranged longitudinally with respect to the drum (1), the base being spot-welded on the drum (1) in correspondence of the marks present on the corresponding ferrule.

The following step consists in heating the rolling rings (14) of C40 steel according to WPS using resistors on ceramic plates connected to the specific equipment, in such a way as to improve the weldability of the material. Then one welds the supports of the rolling rings to the rolling rings (14) themselves, to then weld all the components present outside the cylinder, which have been previously spot-welded, including the teeth (10) of the supports (9) of the blades (6), the teeth (10) having been previously spot-welded inside the drum (1) after the insertion of the teeth (10) into the respective insertion seats (12).

Then the outlet blades (13) are mounted on the fixing bases previously applied in correspondence of the zone of the drum (1) in which the material outlet mouth (3) is present.

Finally, an operation of grinding of the welding defects present on the drum (1) is performed.

In short, the present invention relates (Fig. 1, Fig. 2, Fig. 3) to a method of manufacturing a drum (1) of a dryer for the drying of materials in the form of conglomerates, wherein the method provides:
- preliminary phases of processing and assembly of one or more metal-sheets with the obtainment of the drum (1) consisting of an internally hollow cylindrical metallic structure;
- phases of assembly inside the drum (1) of one or more series of supports (9) of blades (6), wherein the blades (6) are configured and structured in such a way as to cause the advancement of the materials in the form of conglomerates when the drum (1) is put in rotation.

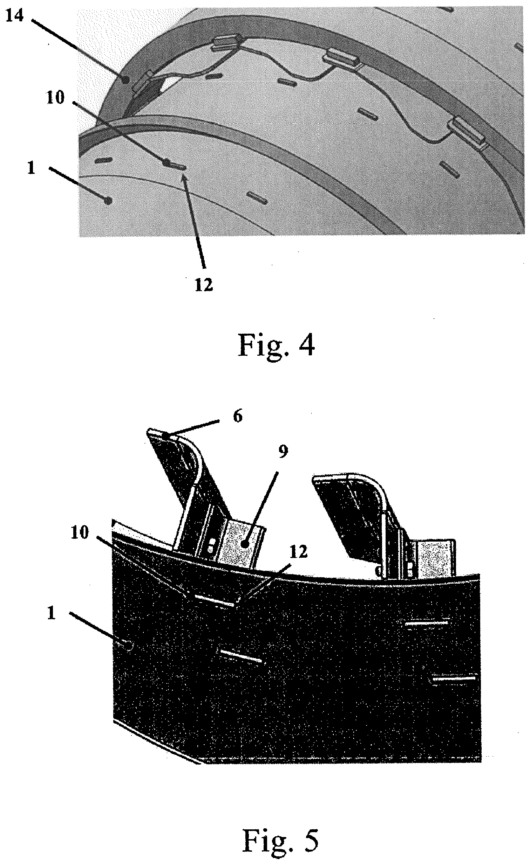

The phases of assembly of the supports (9) of the blades (6) comprise the following steps:
(a) making (Fig. 1, Fig. 2, Fig. 4, Fig. 7, Fig. 8) of one or more series of insertion seats (12, 12', 12") wherein each seat (12) constitutes a passing-through notch through the thickness of at least one of the one or more metal-sheets of the drum (1), the term passing-through being understood in the sense that the notch puts in communication the inside of the internally hollow cylindrical metallic structure and the outside of the cylindrical metallic structure, the series of insertion seats (12, 12', 12") radially developing along the longitudinal development of the internally hollow cylindrical metallic structure;
(b) application (Fig. 5, Fig. 6, Fig. 9) on at least one first internal area of the drum (1) of at least one series of the one or more series of supports (9) of the blades (6) wherein the supports (9) are provided with at least one tooth (10), the application step being a step of insertion of said at least one tooth (10) within one of the insertion seats (12);
(e) welding of the at least one series of the one or more series of supports (9) of the blades (6) by means of a phase of external welding which is made (Fig. 10) outside with respect to the internally hollow cylindrical metallic structure.

Each series (12, 12', 12") of supports (9) of the blades (6) consists of a set of supports arranged one after the other along the longitudinal development of the drum (1) and the different series (12, 12', 12") radially develop along the longitudinal development of the internally hollow cylindrical metallic structure. For example there may be (Fig. 3) a first series (12') and a second series (12") which are arranged radially spaced apart by a distance corresponding to an angle (A). The angle (A) may vary depending on the characteristics of the drum (1), on its dimensions, on the material to be processed, etc.

The phases of assembly of the supports (9) of the blades (6) may further comprise the repetition of the following steps between step (b) and step (e):
(c) fixing in position of a part of the at least one series of the one or more series of supports (9) of the blades (6) by means of a provisional fixing for keeping in position the at least one series of the one or more series of supports (9) of the blades (6), wherein the part of the at least one series which is fixed corresponds to a part of the seats (12) of the one or more series of insertion seats (12, 12', 12") which are placed below inside the internally hollow cylindrical metallic structure, the term below referring to the direction of the force of gravity;
(d) rotation of the internally hollow cylindrical metallic structure by a quantity such as to position below a further part of the seats of said one or more series of seats (12, 12', 12").

For example the rotation may occur (Fig. 3) according to a direction of rotation (11) such that a first series (12') comprising a first row (7) of blades or supports is moved from the position in which it is below so that this position is taken by a second series (12") which is thus placed below to facilitate the application of a second row (7) of blades or supports.

The repetition of steps (c) and (d) continues up to the complete positioning of the at least one series of the one or more series of supports (9) of the blades (6).

The phase (c) of fixing in position by means of the provisional fixing for keeping in position the at least one series of the one or more series of supports (9) of the blades (6) may be a phase of making of at least one welding spot but one can also provide solutions in which the provisional fixing is performed in other ways, such as by snap-fitting or by means of a provisional fixing nut or screw.

The tooth (10) preferably has a height such as to protrude at least partially externally to the cylindrical metallic structure when it is in the condition of insertion within the corresponding insertion seat (12), and the phase (e) of welding by means of said external welding with respect to the internally hollow cylindrical metallic structure is preferably a phase of welding with the making (Fig. 10) of a welding seam (19). The welding seam (19) essentially has the same thickness or a greater thickness with respect to the thickness of the metal-sheets constituting the cylindrical metallic structure.

By the method according to the invention the phase (e) of welding by means of the external welding can be advantageously carried out by a phase of automated welding by means of a welding robot provided with a welding device. In that case the method may further comprise a phase of identification of the position of the tooth (10) by optical recognition means, said phase of identification occurring before the phase (e) of welding.

Therefore, in general, the phase of automated welding by means of a welding robot may comprise the repetition of the following sub-phases:
(e1) for at least one series of the one or more series of supports (9) of the blades (6):
   (i) identification of the position of one of the teeth (10) by the optical recognition means which are configured to identify the teeth (10) present in a recognition zone;
   (ii) movement of the welding robot in such a way as to position the welding device in a condition of proximity to the identified tooth (10);
   (iii) execution of the welding;
(e2) rotation of the internally hollow cylindrical metallic structure by a quantity such as to position in the recognition zone a further series of the one or more series of supports (9) of the blades (6) which still has to be subjected to the phase of automated welding;
the repetition of the sub-phases (e1) and (e2) continuing up to the complete automated welding of the one or more series of supports (9) of the blades (6).

Finally, the present invention also relates (Fig. 1, Fig. 2, Fig. 3) to a drum (1) of a dryer for the drying of materials in the form of conglomerates, wherein the drum (1) consists of one or more folded and reciprocally fixed metal-sheets forming an internally hollow cylindrical metallic structure, the drum (1) being internally provided with one or more series of supports (9) of the blades (6), wherein the blades (6) are configured and structured in such a way to cause the advancement of the materials in the form of conglomerates when the drum (1) is put in rotation. The drum (1) comprises (Fig. 1, Fig. 2, Fig. 4, Fig. 7, Fig. 8) one or more series of insertion seats (12, 12', 12"), wherein each seat (12) constitutes a passing-through notch through the thickness of at least one of the one or more metal-sheets of the drum (1), the term passing-through being understood in the sense that the notch puts in communication the inside of the internally hollow cylindrical metallic structure and the outside of the cylindrical metallic structure. The series of insertion seats (12, 12', 12") radially develop along the longitudinal development of the internally hollow cylindrical metallic structure, the supports (9) of the blades (6) being provided with at least one tooth (10) which is (Fig. 5, Fig. 6, Fig. 9) in a condition of insertion within one of the insertion seats (12), the supports (9) of the blades (6) being fixed to the internally hollow cylindrical metallic structure by means of an external weld which is made outside with respect to the internally hollow cylindrical metallic structure.

The description of the present invention has been made with reference to the enclosed figures in a preferred embodiment, but it is evident that many possible changes, modifications and variations will be immediately clear to those skilled in the art in the light of the previous description. Thus, it must be underlined that the invention is not limited to the previous description, but it includes all the changes, modifications and variations in accordance with the appended claims.

### Nomenclature used

With reference to the identification numbers in the enclosed figures, the following nomenclature has been used:
1. Drum
2. Material inlet mouth
3. Material outlet mouth
4. Dryer
5. Circumferential opening
6. Blade
7. First row of blades or supports
8. Second row of blades or supports
9. Support
10. Tooth
11. Direction of rotation
12. Seat
12'. First series of seats
12". Second series of seats
13. Outlet blade
14. Rolling ring
15. First ferrule
16. Second ferrule
17. Third ferrule
18. Fourth ferrule
19. Welding seam

## Claims

1. Method of manufacturing a drum (1) for a dryer for the drying of materials in the form of
conglomerates, wherein the method provides:
- preliminary phases of processing and assembly of one or more metal-sheets with the obtainment of said drum (1) consisting of an internally hollow cylindrical metallic structure;
- phases of assembly inside the drum (1) of one or more series of supports (9) of blades (6), wherein the blades (6) are configured and structured in such a way as to cause the advancement of the materials in the form of conglomerates when the drum (1) is put in rotation;
wherein
the phases of assembly of the supports (9) of the blades (6) comprise the following steps:
(a) making of one or more series of insertion seats (12, 12', 12") wherein each seat (12) constitutes a passing-through notch through the thickness of at least one of the one or more metal-sheets of the drum (1), the term passing-through being understood in the sense that the notch puts in communication the inside of the internally hollow cylindrical metallic structure and the outside of the cylindrical metallic structure, the series of insertion seats (12, 12', 12") radially developing along the longitudinal development of the internally hollow cylindrical metallic structure;
(b) application on at least one first internal area of the drum (1) of at least one series of the one or more series of supports (9) of the blades (6) wherein the supports (9) are provided with at least one tooth (10), said application step being a step of insertion of said at least one tooth (10) within one of the insertion seats (12);
(e) welding of said at least one series of the one or more series of supports (9) of the blades (6);
**characterised in that**
the phases of assembly of the supports (9) of the blades (6) further comprise the repetition of the following steps between step (b) and step (e):
(c) fixing in position of a part of said at least one series of the one or more series of supports (9) of the blades (6) by means of a provisional fixing for keeping in position said at least one series of the one or more series of supports (9) of the blades (6), wherein the part of said at least one series which is fixed corresponds to a part of the seats (12) of said one or more series of insertion seats (12, 12', 12") which are placed below inside the internally hollow cylindrical metallic structure, the term below referring to the direction of the force of gravity;
(d) rotation of the internally hollow cylindrical metallic structure by a quantity such as to position below a further part of the seats of said one or more series of seats (12, 12', 12");
repeating steps (c) and (d) continuing up to the complete positioning of said at least one series of the one or more series of supports (9) of the blades (6);
and further **characterized in that**
said tooth (10) has a height such as to protrude at least partially externally to the cylindrical metallic structure when it is in the condition of insertion within the corresponding insertion seat (12) so that said phase (e) relative to welding said at least one series of the one or more series of supports (9) of the blades (6) is a phase of external welding of the externally protruding portion of the tooth (10) and said phase (e) relative to welding is made outside with respect to the internally hollow cylindrical metallic structure, said phase (e) of welding by means of said external welding with respect to the internally hollow cylindrical metallic structure being a phase of welding with the making of a welding seam in which the welding seam essentially has the same thickness or a greater thickness with respect to the thickness of the metal-sheets constituting the cylindrical metallic structure.

2. Method of manufacturing a drum (1) of a dryer for the drying of materials in the form of conglomerates according to the previous claim **characterised in that** the phase (c) of fixing in position by means of said provisional fixing for keeping in position said at least one series of the one or more series of supports (9) of the blades (6) is a phase of making of at least one welding spot.

3. Method of manufacturing a drum (1) of a dryer for the drying of materials in the form of conglomerates according to any of the previous claims **characterised in that** said phase (e) of welding by means of said external welding is a phase of automated welding by means of a welding robot provided with a welding device.

4. Method of manufacturing a drum (1) of a dryer for the drying of materials in the form of conglomerates according to the previous claim **characterised in that** it further comprises a phase of identification of the position of said tooth (10) by optical recognition means, said phase of identification occurring before said phase (e) of welding.

5. Method of manufacturing a drum (1) of a dryer for the drying of materials in the form of conglomerates according to any of the previous claims 3 to 4 **characterised in that** said phase of automated welding by means of said welding robot comprises the repetition of the following sub-phases:
(e1) for at least one series of the one or more series of supports (9) of the blades (6):
(i) identification of the position of one of said teeth (10) by the optical recognition means which are configured to identify the teeth (10) which are present in a recognition zone;
(ii) movement of the welding robot in such a way as to position the welding device in a condition of proximity to the identified tooth (10);
(iii) execution of said welding;
(e2) rotation of the internally hollow cylindrical metallic structure by a quantity such as to position in the recognition zone a further series of the one or more series of supports (9) of the blades (6) which still has to be subjected to the phase of automated welding;
the repetition of the sub-phases (e1) and (e2) continuing up to the complete automated welding of the one or more series of supports (9) of the blades (6).

6. Drum (1) of a dryer for the drying of materials in the form of conglomerates wherein the drum (1) consists of one or more folded and reciprocally fixed metal-sheets forming an internally hollow cylindrical metallic structure, the drum (1) being internally provided with one or more series of supports (9) of blades (6), wherein the blades (6) are configured and structured in such a way to cause the advancement of the materials in the form of conglomerates when the drum (1) is put in rotation, **characterised in that** the drum (1) comprises one or more series of insertion seats (12, 12', 12") wherein each seat (12) constitutes a passing-through notch through the thickness of at least one of the one or more metal-sheets of the drum (1), the term passing-through being understood in the sense that the notch puts in communication the inside of the internally hollow cylindrical metallic structure and the outside of the cylindrical metallic structure, the series of insertion seats (12, 12', 12") radially developing along the longitudinal development of the internally hollow cylindrical metallic structure, the supports (9) of the blades (6) being provided with at least one tooth (10) which is in a condition of insertion within one of the insertion seats (12),
and further **characterised in that**
said tooth (10) has a height such as to protrude at least partially externally to the cylindrical metallic structure when it is in the condition of insertion within the corresponding insertion seat (12), the supports (9) of the blades (6) being fixed to the internally hollow cylindrical metallic structure by means of an external weld which is made outside with respect to the internally hollow cylindrical metallic structure, said weld being an external weld made on the externally protruding portion of the tooth (10), said weld being made in the form of a welding seam, the welding seam essentially having the same thickness or a greater thickness with respect to the thickness of the metal-sheets constituting the cylindrical metallic structure.

7. Drum (1) of a dryer for the drying of materials in the form of conglomerates according to the previous claim **characterised in that**
it is obtained by means of a method according to any of the previous claims 1 to 5.

## Patentansprüche

1. Verfahren zur Herstellung einer Trommel (1) für einen Trockner zum Trocknen von Materialien in Form von Konglomeraten, wobei das Verfahren Folgendes vorsieht:
- vorbereitende Phasen der Bearbeitung und des Zusammenbaus eines oder mehrerer Bleche, wobei die besagte Trommel (1) erhalten wird, die aus einer innen hohlzylindrischen Metallstruktur besteht;
- Montagephasen innerhalb der Trommel (1) einer oder mehrerer Reihen von Trägern (9) von Schaufeln (6), wobei die Schaufeln (6) derart konfiguriert und strukturiert sind, dass sie das Vorschieben der Materialien in der Form bewirken von Konglomeraten, wenn die Trommel (1) in Rotation versetzt wird;
wobei
die Phasen der Montage der Träger (9) der Schaufeln (6) die folgenden Schritte umfassen:
(a) Herstellen einer oder mehrerer Reihen von Einsetzsitzen (12, 12', 12"), wobei jeder Sitz (12) eine durchgehende Kerbe durch die Dicke von mindestens einem der einen oder mehreren Bleche der Trommel (1) bildet, wobei der Begriff Durchgang in dem Sinne verstanden wird, dass die Kerbe die Innenseite der innen hohlzylindrischen metallischen Struktur und die Außenseite der zylindrischen metallischen Struktur in Verbindung bringt, wobei sich die Reihe von Einsetzsitzen (12, 12', 12") radial entlang der Längsentwicklung der innen hohlzylindrischen Metallstruktur entwickelt;
(b) Aufbringen mindestens einer Reihe der einen oder mehreren Reihen von Trägern (9) der Schaufeln (6) auf mindestens einen ersten Innenbereich der Trommel (1), wobei die Träger (9) mit mindestens einem Zahn (10) versehen sind, wobei der besagte Aufbringschritt ein Schritt des Einführens des besagten mindestens einen Zahns (10) in einen der Einführsitze (12) ist;
(e) Schweißen der besagten mindestens einen Reihe der einen oder mehreren Reihen von Trägern (9) der Schaufeln (6);
**dadurch gekennzeichnet, dass**
die Montagephasen der Stützen (9) der Schaufeln (6) weiterhin die Wiederholung der folgenden Schritte zwischen Schritt (b) und Schritt (e) umfassen:
(c) Fixieren eines Teils der besagten mindestens einen Reihe der einen oder mehreren Reihen von Trägern (9) der Schaufeln (6) in Position mittels einer provisorischen Fixierung, um die besagte mindestens eine Reihe der einen in Position zu halten oder mehrere Reihen von Stützen (9) der Schaufeln (6), wobei der Teil der besagten mindestens einen Reihe, der befestigt ist, einem Teil der Sitze (12) der besagten einen oder mehreren Reihen von Einsetzsitzen (12, 12', 12") entspricht, die unterhalb der innen hohlzylindrischen Metallstruktur angeordnet sind, wobei sich der Ausdruck unten auf die Richtung der Schwerkraft bezieht;
(d) Drehung der innen hohlzylindrischen Metallstruktur um eine solche Größe, dass sie sich unter einem weiteren Teil der Sitze der besagten einen oder mehreren Sitzreihen (12, 12', 12") befindet;
Wiederholen der Schritte (c) und (d) bis zur vollständigen Positionierung der besagten mindestens einen Reihe der einen oder mehreren Reihen von Stützen (9) der Schaufeln (6); und ferner **dadurch gekennzeichnet, dass**
der besagte Zahn (10) eine solche Höhe aufweist, dass er zumindest teilweise außerhalb der zylindrischen metallischen Struktur vorsteht, wenn er sich im Zustand des Einsetzens in dem entsprechenden Einsetzsitz (12) befindet, so dass die besagte Phase (e) in Bezug auf das Schweißen der besagten mindestens einen Reihe der einen oder mehreren Reihen von Trägern (9) der Schaufeln (6) eine Phase des externen Schweißens des extern hervorstehenden Abschnitts des Zahns (10) ist und die besagte Phase (e) in Bezug auf das Schweißen außerhalb der innen hohlzylindrischen Metallstruktur erfolgt, wobei die besagte Phase (e) des Schweißens mittels des Außenschweißens in Bezug auf die innen hohlzylindrische metallische Struktur eine Schweißphase beim Herstellen einer Schweißnaht ist, bei der die Schweißnaht im wesentlichen die gleiche Dicke oder eine größere Dicke in Bezug auf die Dicke der Bleche aufweist, die die zylindrische Metallstruktur bilden.

2. Verfahren zur Herstellung einer Trommel (1) eines Trockners zum Trocknen von Materialien in Form von Konglomeraten nach dem vorhergehenden Anspruch, **dadurch gekennzeichnet, dass**
die Phase (c) des Fixierens in Position mittels des besagten vorläufigen Fixierens zum Halten der besagten mindestens einen Reihe der einen oder mehreren Reihen von Stützen (9) der Schaufeln (6) in Position ist, eine Phase der Herstellung von mindestens einem Schweißpunkt ist.

3. Verfahren zur Herstellung einer Trommel (1) eines Trockners zum Trocknen von Materialien in Form von Konglomeraten nach einem der vorhergehenden Ansprüche **dadurch gekennzeichnet, dass**
die besagte Phase (e) des Schweißens mittels des besagten externen Schweißens ist eine Phase des automatisierten Schweißens mittels eines Schweißroboters, der mit einer Schweißvorrichtung versehen ist.

4. Verfahren zur Herstellung einer Trommel (1) eines Trockners zum Trocknen von Materialien in Form von Konglomeraten nach dem vorhergehenden Anspruch, **dadurch gekennzeichnet, dass**
es ferner eine Phase der Identifizierung der Position des besagten Zahns (10) durch optische Erkennungsmittel umfasst, wobei die besagte Identifizierungsphase vor der besagten Phase (e) des Schweißens auftritt.

5. Verfahren zur Herstellung einer Trommel (1) eines Trockners zum Trocknen von Materialien in Form von Konglomeraten nach einem der vorhergehenden Ansprüche 3 bis 4, **dadurch gekennzeichnet, dass**
die besagte Phase des automatisierten Schweißens mittels des besagten Schweißroboters umfasst die Wiederholung der folgenden Unterphasen:
(e1) für mindestens eine Reihe von einer oder mehreren Reihen von Trägern (9) der Schaufeln (6):
(i) Identifizieren der Position eines der besagten Zähne (10) durch die optischen Erkennungsmittel, die konfiguriert sind, um die Zähne (10) zu identifizieren, die in einer Erkennungszone vorhanden sind;
(ii) Bewegung des Schweißroboters derart, dass die Schweißvorrichtung in einem Zustand in der Nähe des identifizierten Zahns (10) positioniert wird;
(iii) Ausführen des besagten Schweißens;
(e2) Drehung der innen hohlzylindrischen metallischen Struktur um eine Größe, um in der Erkennungszone eine weitere Reihe der einen oder mehreren Reihen von Trägern (9) der Schaufeln (6) zu positionieren, die noch der Phase des automatisierten Schweißens unterzogen werden muss;
Die Wiederholung der Unterphasen (e1) und (e2) setzt sich bis zum vollständigen automatisierten Schweißen einer oder mehrerer Reihen von Trägern (9) der Schaufeln (6) fort.

6. Trommel (1) eines Trockners zum Trocknen von Materialien in Form von Konglomeraten, wobei die Trommel (1) aus einem oder mehreren gefalteten und wechselseitig befestigten Metallblechen besteht, die eine innen hohlzylindrische Metallstruktur bilden, wobei die Trommel (1) innen mit einer oder mehreren Reihen von Trägern (9) von Schaufeln (6) versehen ist, wobei die Schaufeln (6) derart ausgestaltet und strukturiert sind, dass beim Drehen der Trommel (1) ein Vorschub der Materialien in Form von Konglomeraten bewirkt wird, **dadurch gekennzeichnet**
die Trommel (1) weist eine oder mehrere Reihen von Einsetzsitzen (12, 12', 12") auf, wobei jeder Sitz (12) eine durchgehende Kerbe in der Dicke von mindestens einem der einen oder mehreren Bleche der Trommel (1) bildet, wobei der Begriff Durchgang in dem Sinne verstanden wird, dass die Kerbe die Innenseite der innen hohlzylindrischen metallischen Struktur und die Außenseite der zylindrischen metallischen Struktur in Verbindung bringt, wobei sich die Reihe von Einsetzsitzen (12, 12', 12") radial entlang der Längsentwicklung der innen hohlzylindrischen Metallstruktur entwickelt, wobei die Stützen (9) der Schaufeln (6) mit mindestens einem Zahn (10) versehen sind, der sich in einem Einsetzzustand innerhalb eines der Einsetzsitze (12) befindet,
und weiter **dadurch gekennzeichnet, dass**
der besagte Zahn (10) eine solche Höhe aufweist, dass er zumindest teilweise außerhalb der zylindrischen Metallstruktur vorsteht, wenn er sich im Zustand des Einsetzens innerhalb des entsprechenden Einsetzsitzes (12) befindet, die Stützen (9) der Schaufeln (6) an der innen hohlzylindrischen Metallstruktur mittels eines äußeren Schweißens befestigt sind, die bezüglich der innen hohlzylindrischen Metallstruktur außen angebracht ist, wobei der besagte Schweiß einer Außenschweiß ist, die an dem außen vorstehenden Abschnitt des Zahns (10) hergestellt ist, wobei der besagte Schweiß in Form einer Schweißnaht hergestellt ist, die Schweißnaht hat im wesentlichen die gleiche Dicke oder eine größere Dicke in Bezug auf die Dicke der Bleche, die die zylindrische Metallstruktur bilden.

7. Trommel (1) eines Trockners zum Trocknen von Materialien in Form von Konglomeraten nach dem vorhergehenden Anspruch **dadurch gekennzeichnet, dass**
es mittels eines Verfahrens nach einem der vorhergehenden Ansprüche 1 bis 5 erhalten wird.

## Revendications

1. Méthode de fabrication d'un tambour (1) pour un séchoir pour le séchage de matériaux sous la forme de conglomérats, où la méthode prévoit :
- des phases préliminaires de traitement et assemblage d'une ou plusieurs feuilles de métal avec l'obtention dudit tambour (1) consistant en une structure métallique cylindrique intérieurement creuse ;
- des phases d'assemblage à l'intérieur du tambour (1) d'une ou plusieurs séries de supports (9) de lames (6), où les lames (6) sont configurées et structurées de façon à provoquer l'avancement des matériaux sous la forme de conglomérats lorsque le tambour (1) est mis en rotation ;
où
les phases d'assemblage des supports (9) des lames (6) comprennent les phases suivantes :
(a) fabrication d'une ou plusieurs séries de logements d'insertion (12, 12', 12") où chaque logement (12) constitue une encoche passante à travers l'épaisseur d'au moins une de l'une ou plusieurs feuilles de métal du tambour (1), le terme passante étant entendu dans le sens que l'encoche met en communication l'intérieur de la structure métallique cylindrique intérieurement creuse et l'extérieur de la structure métallique cylindrique, la série de logements d'insertion (12, 12', 12") se développant radialement le long du développement longitudinal de la structure métallique cylindrique intérieurement creuse ;
(b) application sur au moins une première zone interne du tambour (1) d'au moins une série de l'une ou plusieurs séries de supports (9) des lames (6) où les supports (9) sont pourvus d'au moins une dent (10), ladite phase d'application étant une phase d'insertion de ladite au moins une dent (10) à l'intérieur d'un des logements d'insertion (12) ;
(e) soudage de ladite au moins une série de l'une ou plusieurs séries de supports (9) des lames (6) ;
**caractérisée en ce que**
les phases d'assemblage des supports (9) des lames (6) comprennent en outre la répétition des phases suivantes entre la phase (b) et la phase (e):
(c) fixage en position d'une partie de ladite au moins une série de l'une ou plusieurs séries de supports (9) des lames (6) au moyen d'un fixage provisoire pour retenir en position ladite au moins une série de l'une ou plusieurs séries de supports (9) des lames (6), où la partie de ladite au moins une série qui est fixée correspond à une partie des logements (12) de ladite une ou plusieurs séries de logements d'insertion (12, 12', 12") qui sont placés en bas à l'intérieur de la structure métallique cylindrique intérieurement creuse, le terme en bas se référant à la direction de la force de gravité;
(d) rotation de la structure métallique cylindrique intérieurement creuse d'une quantité telle à positionner en bas une partie additionnelle des logements de ladite une ou plusieurs séries de logements (12, 12', 12");
répétition des phases (c) et (d) continuant jusqu'au positionnement complet de ladite au moins une série de l'une ou plusieurs séries de supports (9) des lames (6);
et **caractérisée en outre en ce que**
ladite dent (10) a une hauteur telle qu'elle saillit au moins partiellement extérieurement à la structure métallique cylindrique quand elle est dans la condition d'insertion à l'intérieur du logement d'insertion correspondant (12) de façon que ladite phase (e) relative au soudage de ladite au moins une série de l'une ou plusieurs séries de supports (9) des lames (6) est une phase de soudage externe de la partie saillante extérieurement de la dent (10) et ladite phase (e) relative au soudage est faite à l'extérieur par rapport à la structure métallique cylindrique intérieurement creuse, ladite phase (e) de soudage au moyen dudit soudage externe par rapport à la structure métallique cylindrique intérieurement creuse étant une phase de soudage avec la fabrication d'un joint de soudage où le joint de soudage a essentiellement la même épaisseur ou une épaisseur supérieure par rapport à l'épaisseur des feuilles de métal constituant la structure métallique cylindrique.

2. Méthode de fabrication d'un tambour (1) d'un séchoir pour le séchage de matériaux sous la forme de conglomérats selon la revendication précédente **caractérisée en ce que** la phase (c) de fixage en position au moyen dudit fixage provisoire pour retenir en position ladite au moins une série de l'une ou plusieurs séries de supports (9) des lames (6) est une phase de fabrication d'au moins un point de soudage.

3. Méthode de fabrication d'un tambour (1) d'un séchoir pour le séchage de matériaux. sous la forme de conglomérats selon l'une quelconque des revendications précédentes **caractérisée en ce que**
ladite phase (e) de soudage au moyen dudit soudage externe est une phase de soudage automatisé au moyen d'un robot de soudage pourvu d'un dispositif de soudage.

4. Méthode de fabrication d'un tambour (1) d'un séchoir pour le séchage de matériaux sous la forme de conglomérats selon la revendication précédente **caractérisée en ce que** elle comprend en outre une phase d'identification de la position de ladite dent (10) par des moyens de reconnaissance optique, ladite phase d'identification ayant lieu avant ladite phase (e) de soudage.

5. Méthode de fabrication d'un tambour (1) d'un séchoir pour le séchage de matériaux sous la forme de conglomérats selon l'une quelconque des revendications précédentes 3 à 4 **caractérisée en ce que**
ladite phase de soudage automatisé au moyen dudit robot de soudage comprend la répétition des sous-phases suivantes:
(e1) pour au moins une série de l'une ou plusieurs séries de supports (9) des lames (6) :
(i) identification de la position d'une desdites dents (10) par les moyens de reconnaissance optique qui sont configurés pour identifier les dents (10) qui sont présentes dans une zone de reconnaissance;
(ii) mouvement du robot de soudage de façon à positionner le dispositif de soudage dans une condition de proximité à la dent identifiée (10);
(iii) exécution dudit soudage;
(e2) rotation de la structure métallique cylindrique intérieurement creuse d'une quantité telle à positionner dans la zone de reconnaissance une série additionnelle de l'une ou plusieurs séries de supports (9) des lames (6) qui doit être encore soumise à la phase de soudage automatisé;
la répétition des sous-phases (e1) et (e2) continuant jusqu'au soudage automatisé complet de l'une ou plusieurs séries de supports (9) des lames (6).

6. Tambour (1) d'un séchoir pour le séchage de matériaux sous la forme de conglomérats où le tambour (1) consiste en une ou plusieurs feuilles de métal pliées et réciproquement fixées formant une structure métallique cylindrique intérieurement creuse, le tambour (1) étant intérieurement pourvu d'une ou plusieurs séries de supports (9) de lames (6), où les lames (6) sont configurées et structurées de façon à provoquer l'avancement des matériaux sous la forme de conglomérats lorsque le tambour (1) est mis en rotation,
**caractérisé en ce que**
le tambour (1) comprend une ou plusieurs séries de logements d'insertion (12, 12', 12") où chaque logement (12) constitue une encoche passante à travers l'épaisseur d'au moins une de l'une ou plusieurs feuilles de métal du tambour (1), le terme passante étant entendu dans le sens que l'encoche met en communication l'intérieur de la structure métallique cylindrique intérieurement creuse et l'extérieur de la structure métallique cylindrique, la série de logements d'insertion (12, 12', 12") se développant radialement le long du développement longitudinal de la structure métallique cylindrique intérieurement creuse, les supports (9) des lames (6) étant pourvus d'au moins une dent (10) qui est dans un condition d'insertion à l'intérieur d'un des logements d'insertion (12),
et **caractérisé en outre en ce que**
ladite dent (10) a une hauteur telle qu'elle saillit au moins partiellement extérieurement à la structure métallique cylindrique lorsqu'elle est dans le condition d'insertion à l'intérieur du logement d'insertion correspondant (12), les supports (9) des lames (6) étant fixés à la structure métallique cylindrique intérieurement creuse au moyen d'une soudure externe qui est faite à l'extérieur par rapport à la structure métallique cylindrique intérieurement creuse, ladite soudure étant une soudure externe faite sur la partie saillante extérieurement de la dent (10), ladite soudure étant faite sous la forme d'un joint de soudage, le joint de soudage ayant essentiellement la même épaisseur ou une épaisseur supérieure par rapport à l'épaisseur des feuilles de métal constituant la structure métallique cylindrique.

7. Tambour (1) d'un séchoir pour le séchage de matériaux sous la forme de conglomérats selon la revendication précédente **caractérisé en ce que**
il est obtenu au moyen d'une méthode selon l'une quelconque des revendications précédentes 1 à 5.
